# EUROPEAN PATENT APPLICATION

(11) **EP 3 489 539 A1**
(43) Date of publication of application: **29.05.2019**
(21) Application number: 17830646.0
(22) Date of filing: 21.03.2017
(51) Int. Cl.: F16F 9/32, F16F 9/20, F16F 9/26, F16F 15/04

(54) **DAMPER**

(30) Priority: 21.07.2016 JP 2016143561
(71) Applicant: KYB Corporation, Tokyo 105-6111 (JP); Nagoya Institute Of Technology, Nagoya-shi, Aichi 466-8555 (JP)
(72) Inventor: NAKAZATO, Masakazu, Tokyo 105-6111 (JP); OOTA, Akihisa, Tokyo 105-6111 (JP); SEKINE, Shinichi, Tokyo 105-6111 (JP); TOYOUCHI, Atsushi, Tokyo 105-6111 (JP); FUKUZAWA, Yuuji, Nagano 389-0688 (JP); IDO, Yasushi, Nagoya-shi Aichi 466-8555 (JP)
(74) Representative: MFG Patentanwälte Meyer-Wildhagen Meggle-Freund Gerhard PartG mbB
(86) International application number: PCT/JP2017/011190
(87) International publication number: WO 2018/016124

(57) **Abstract**

Provided is a damper capable of reducing cost and eliminating a problem of liquid leakage.

A damper (D1) of the present invention includes: a damping portion (A1) that exerts a damping force by using a granular material at a time of extension and contraction; and an elastic portion (E1) that exerts an elastic force at the time of extension and contraction, wherein the damping portion (A1) is coupled to the elastic portion (E1) such that the damping force and the elastic force are exerted in parallel.

## Description

### Technical Field

The present invention relates to a damper.

### Background Art

Conventionally, as disclosed in JP 2012-149690 A, there is a damper having a function as a spring and a function as a damper by sealing a silicone oil as a hydraulic oil in the cylinder.

### Summary of the Invention

However, in a case where oil such as a silicone oil is used for generating a damping force like a conventional damper, it is indispensable to provide a seal to prevent the outflow of oil, which raises the cost, and there is concern that the possibility of liquid leakage is pointed out. It is therefore an object of the present invention to provide a damper capable of reducing the cost and eliminating the problem of liquid leakage.

The present invention includes: a damping portion that exerts a damping force by using a granular material at the time of extension and contraction; and an elastic portion that exerts an elastic force at the time of extension and contraction. The damping portion is coupled to the elastic portion such that the damping force and the elastic force are exerted in parallel. According to the above configuration, a friction force generated between the granular material and the damping portion at the time of extension and contraction of the damper can be used as the damping force, and it is not necessary to use a liquid such as oil for generating a damping force. Furthermore, unlike liquids such as oils and gases, without providing a seal, the granular material is not lost by flowing out, so that sealing is unnecessary.

### Brief description of Drawings

Fig. 1 is a front view schematically illustrating a damper being attached according to a first embodiment of the present invention.
Fig. 2 is a longitudinal sectional view of the damper according to the first embodiment of the present invention, and (a) in Fig. 2 illustrates a piston portion thereof.
Fig. 3 is a longitudinal sectional view of a damper according to a second embodiment of the present invention, and (a) in Fig. 3 illustrates a piston portion thereof.
Fig. 4 is a longitudinal sectional view of a damper according to a modified example of the second embodiment of the present invention.

### Description of Embodiments

Embodiments of the present invention will be described below with reference to the drawings.

### First Embodiment

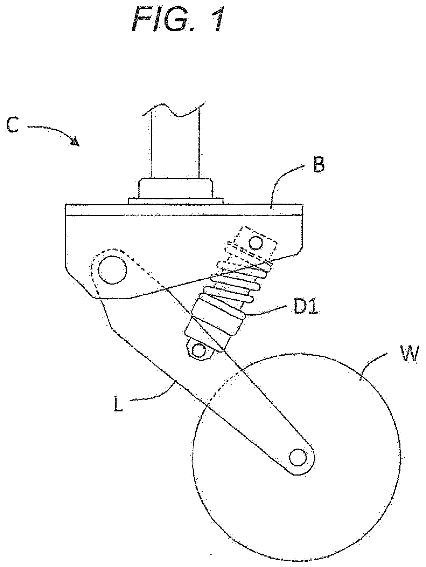

As illustrated in Fig. 1, a damper D1 according to a first embodiment of the present invention is used in, for example, a caster C of a carriage, a wheelchair, a stroller, or the like for carrying a load. Specifically, the caster C includes: a bracket B fixed to a vehicle body; a link L swingably supported by the bracket B; a wheel W rotatably supported by the leading end of the link L; and the damper D1 provided between the bracket B and the link L.

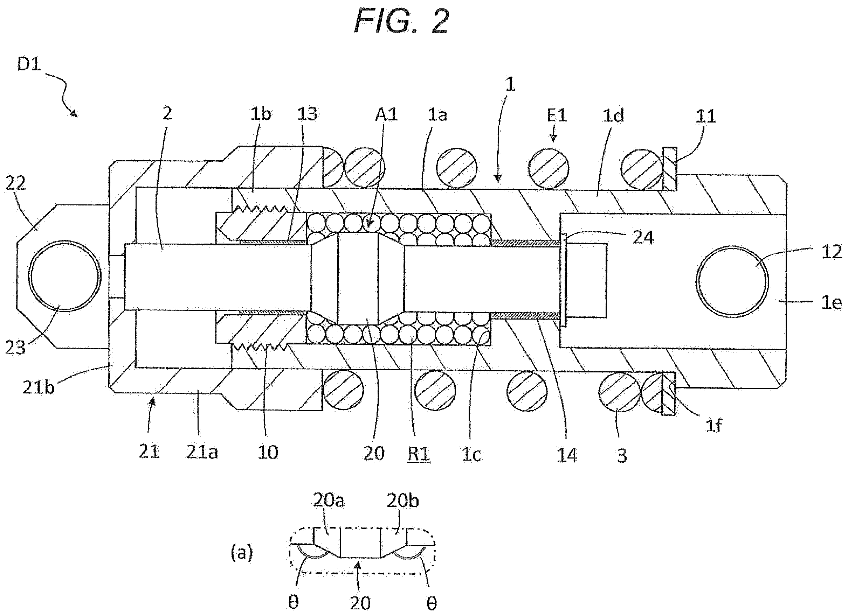

As illustrated in Fig. 2, the damper D1 includes: a cylinder 1; a rod 2 movably inserted into the cylinder 1; an annular rod guide 10 closing an opening of the left end in Fig. 2 of the cylinder 1, the rod 2 penetrating through a center portion of the rod guide 10; a piston 20 coupled to the rod 2 and moving in the axial direction in the cylinder 1; a spring bearing 21 coupled to the left end in Fig. 2 of the rod 2 projecting outward from the cylinder 1; a spring bearing 11 installed on the outer periphery of the cylinder 1; and a spring 3 interposed between the spring bearing 21 and the spring bearing 11.

In the Fig. 2, an attachment portion 22 and an attachment portion 1e are provided at the left end in Fig. 2 of the spring bearing 21 positioned at one end of the damper D1 and at the right end in Fig. 2 of the cylinder 1 positioned at another end of the damper D1, respectively, and any one of the attachment portions 22, 1e is rotatably coupled to the bracket B (Fig. 1) and the other one is rotatably coupled to the link L (Fig. 1). Thus, when the wheel W (Fig. 1) moves up and down due to, for example, unevenness on a road surface, the rod 2 enters and leaves the cylinder 1, the damper D1 extends and contracts, and the link L (Fig. 1) swings. The use of the damper D1 is not limited to the caster C, and can be appropriately changed.

Each member constituting the damper D1 will be described below. The cylinder 1 has a tubular cylinder main body 1a, an annular coupling portion 1b continuing to the left side in Fig. 2 of the cylinder main body 1a and having a thread groove formed on the inner periphery thereof, an annular guide 1c continuing to the right side in Fig. 2 of the cylinder main body 1a and having an inner diameter smaller than the inner diameter of the cylinder main body 1a, a tubular cover 1d continuing to the right side in Fig. 2 of the guide 1c and having an inner diameter larger than the inner diameter of the guide 1c, and the tubular attachment portion 1e continuing to the right side in Fig. 2 of the cover 1d and having an outer diameter larger than the outer diameter of the cover 1d. The attachment portion 1e has a large thickness and a high strength against bending, and the cylinder 1 is coupled to the bracket B or the link L via a pin 12 inserted through the attachment portion 1e.

Furthermore, in the cylinder 1, the rod guide 10 is threadedly engaged with the inner periphery of the coupling portion 1b, and a granular material is contained in a room R1 surrounded by the cylinder main body 1a, the rod guide 10, and the guide 1c. The granular material is an aggregate of particles formed of an elastomer such as nitrile rubber (NBR) and has elasticity. Each particle constituting the granular material can independently move in a state where at least no load is applied.

A bushing 13 and a bushing 14 are fitted to the inner periphery of the rod guide 10 and the inner periphery of the guide 1c, respectively, and the rod 2 is slidably inserted through the bushing 13 and the bushing 14. Each sliding gap is formed between the bushing 13 and the rod 2 and between the bushing 14 and the rod 2, and the gaps are narrow. With this configuration, there is no concern that the granular material flows out of the cylinder 1 from between the rod 2 and the rod guide 10 and from between the rod 2 and the guide 1c without providing a seal and the like therebetween. Furthermore, there is no concern that the granular material flows out of the cylinder 1 from between the coupling portion 1b and the rod guide 10 without providing a seal and the like therebetween.

Subsequently, the rod 2 is movably supported in the axial direction by the rod guide 10 and the guide 1c and penetrates through the room, the left end in Fig. 2 extends outward the cylinder 1, and the right end in Fig. 2 is disposed in the cover 1d. The annular piston 20 is provided on the outer periphery of a portion that is a substantial center in the axial direction of the rod 2 and is disposed in the room R1.

The piston 20 is fixed to the rod 2, and moves left and right in Fig. 2 in the room R1 while moving together with the rod 2, when the rod 2 moves left and right (axial direction) in Fig. 2. The outer diameter of the piston 20 is formed so as to be larger than the outer diameter of the rod 2 and smaller than the inner diameter of the cylinder main body 1a, and an annular gap through which the granular material can pass is formed between the outer periphery of the piston 20 and the inner periphery of the cylinder 1. Furthermore, truncated conical tapered portions 20a, 20b are provided at both ends in the axial direction of the piston 20, respectively, and the tapered portions 20a, 20b each gradually decrease in outer diameter to the leading end (Fig. 2(a)).

Furthermore, in the rod 2, a portion projecting outward from the cylinder 1 is covered with the spring bearing 21. The spring bearing 21 is formed in a tubular shape, and a cylindrical portion 21a is disposed facing the cylinder 1 side. The rod 2 passes through the cylindrical portion 21a of the spring bearing 21 and is coupled to a center portion of a bottom 21b, and the attachment portion 22 is fixed to an opposite side of the rod 2 at the bottom 21b. Then, the rod 2 is coupled to the bracket B or the link L via a pin 23 inserted through an attachment portion 21c.

In addition, the cylinder 1 is movably inserted into the cylindrical portion 21a of the spring bearing 21. Thus, a sliding surface of the rod 2 can be protected by the spring bearing 21, and it is possible to prevent foreign matters such as earth, sand, and dust from adhering to the sliding surface, and scratching the sliding surface. When the inner periphery of the cylindrical portion 21a is brought into sliding contact with the outer periphery of the cylinder 1, the sliding surface of the rod 2 can be more reliably protected, and there may be a gap between the cylindrical portion 21a and the cylinder 1.

Furthermore, the outer periphery of the leading end of the cylindrical portion 21a is enlarged in diameter, and the spring 3 is interposed between the leading end of the cylindrical portion 21a and the spring bearing 11 facing the leading end. On the outer periphery of the cylinder 1, an annular step 1f is formed at the boundary between the guide 1c and the attachment portion 1e, and the spring bearing 11 is supported by the step 1f. That is, in Fig. 2, the left end of the spring 3 is supported by the rod 2 via the spring bearing 21 and the right end of the spring 3 is supported by the cylinder 1 via the spring bearing 11, so that the spring 3 is interposed between the rod 2 and the cylinder 1. The spring 3 is a coil spring formed by spirally winding a wire rod and exerts an elastic force in accordance with an amount of compression.

Furthermore, in the rod 2, a washer 24 is installed on the outer periphery of the right end in Fig. 2 projecting inward the cover 1d. The cover 1d has an inner diameter at which the cover 1d does not interfere with the rod 2 and the washer 24, and the rod 2 has a length set such that the rod 2 does not interfere with the pin 12, the rod 2 being disposed inside the cylinder 1 even when the rod 2 moves left and right (axial direction) in Fig. 2 with respect to the cylinder 1. Therefore, the sliding surface of the rod 2 can be protected by the cover 1d, and it is possible to prevent foreign matter such as earth, sand, and dust from adhering to the sliding surface, and scratching the sliding surface. Furthermore, when the rod 2 moves leftward in Fig. 2 with respect to the cylinder 1 and the washer 24 abuts the guide 1c, further movement of the rod 2 to the left, that is, extension of the damper D1 is restricted. Fig. 2 illustrates the damper D1 in a state where no load is applied (unloaded state), and in the unloaded state, due to the elastic force of the spring 3, the washer 24 abuts the guide 1c and the damper D1 is in the utmost extension state (maximum extension state).

In the damper D1, the step 1f supporting the spring bearing 11 is provided at the boundary between the cover 1d and the attachment portion 1e, but the step 1f may be provided on the outer periphery of the cover 1d. Furthermore, the spring bearing 11 may be eliminated, the step 1f may function as a spring bearing, and the right end in Fig. 2 of the spring 3 may be directly supported by the cylinder 1 itself.

Hereinafter, an operation of the damper D1 according to the present embodiment will be described. When the rod 2 enters the cylinder 1 and the damper D1 contracts, the spring bearing 21 approaches the spring bearing 11 and the spring 3 is compressed, so that the elastic force of the spring 3 increases. Furthermore, when the damper D1 contracts, the piston 20 moves rightward in Fig. 2 in the room R1, so that the granular material on the right side in Fig. 2 of the piston 20 passes through a gap formed on the outer periphery of the piston 20 and moves to the left of the piston 20. Then, a friction force occurs between the piston 20 and the granular material, and the contraction of the damper D1 is suppressed by the friction force.

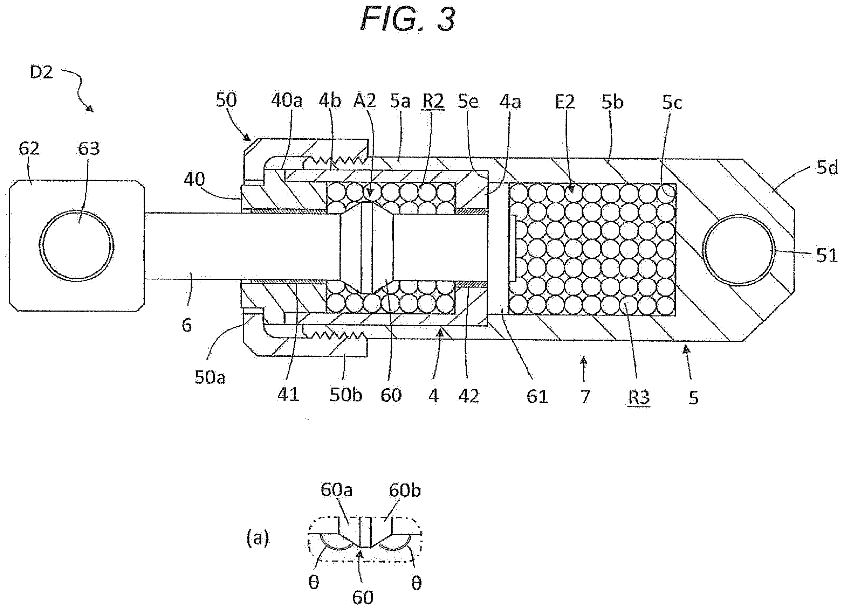

On the contrary, when the rod 2 leaves the cylinder 1 and the damper D1 extends, the spring bearing 21 separates from the spring bearing 11 and the spring 3 extends, so that the elastic force of the spring 3 decreases. Furthermore, when the damper D1 extends, the piston 20 moves leftward in Fig. 2 in the room R1, so that the granular material on the left side in Fig. 3 of the piston 20 passes through a gap formed on the outer periphery of the piston 20 and moves to the right of the piston 20. Then, a friction force occurs between the piston 20 and the granular material, and the extension of the damper D1 is suppressed by the friction force.

When the damper D1 has been attached, the damper D1 contracts in accordance with a load applied to the vehicle body, the spring 3 elastically supports the vehicle body, and the damper D1 extends and contracts in accordance with an input received by the wheel W from the road surface. When the damper D1 extends and contracts, impact due to unevenness on the road surface is absorbed by the spring 3, and the extension and contraction movement of the damper D1 is dampened by a friction force generated between the piston 20 and the granular material.

That is, in the damper D1, the friction force is used as a damping force, and the piston 20 is a damping portion A1 that use the granular material to exert a damping force when the damper D1 extends and contracts, and the spring 3 is an elastic portion E1 that exerts an elastic force when the damper D1 extends and contracts. When the damper D1 extends and contracts, the piston 20 moves in the room R1, so that a friction force occurs between the piston 20 and the granular material, and the spring 3 extends and contracts, and the damping portion A1 is coupled to the elastic portion E1 such that the damping force and the elastic force are exerted in parallel. In other words, the damping portion A1 and the elastic portion E1 are dynamically disposed in parallel, and the damper D1 exerts a force obtained by combining the damping force with the elastic force.

Then, when a force against the extension and contraction of the entire damper D1 is defined as a reaction force of the damper D1, the damper D1 uses the spring 3 that is a coil spring as the elastic portion E1, so that the characteristic of the elastic force (spring characteristic) with respect to the displacement of the damper D1 is a proportional characteristic, and the characteristic of the reaction force (reaction force characteristic) with respect to the displacement of the damper D1 approaches the above characteristic. Furthermore, since the friction force is used as the damping force, hysteresis occurs in the reaction force characteristic of the damper D1. The reaction force characteristic of the damper D1 approaches the reaction force characteristic of a conventional damper using a silicone oil, and when the damper D1 is used for a wheelchair, the ride comfort can be improved.

Furthermore, the characteristic of the damping force (damping characteristic) with respect to the displacement of the damper D1 can be adjusted by changing, for example, the diameter, hardness, filling rate, and shape of the particles of the granular material, a clearance between the piston 20 and the cylinder 1, the axial length of the piston 20, and the shape of the tapered portions 20a, 20b. For example, since the granular material can be elastically deformed, when the diameter of the particles of the granular material is made larger than the clearance between the piston 20 and the cylinder 1, the particles of the granular material move while being crushed between the piston 20 and the cylinder 1 at the time of extension and contraction of the damper D1, and thus the friction force generated between the piston 20 and the granular material increases and the damping force increases. In addition, even when the hardness of the granular material is increased or the filling rate is increased, the damping force increases. Furthermore, when an angle formed by the outer peripheral surface of the rod 2 and the outer peripheral surface of the tapered portion 20a or the outer peripheral surface of the tapered portion 20b of the piston 20 is defined as an inclination angle θ (Fig. 2(a)) of the tapered portion 20a or the tapered portion 20b, the damping force increases even when the inclination angle θ is made small to come close to 90 degrees or the axial length of the piston 20 is increased. When the damping force is increased, the hysteresis is increased. Thus, in the damper D1, since there are a large number of tuning elements for adjusting the damping force, it is possible to finely adjust the damping force and achieve a desired damping characteristic.

In addition, in the damper D1, when the rod 2 moves in the room R1 at the time of extension and contraction, a friction force also occurs between the rod 2 and the granular material. That is, since the rod 2 also constitutes the damping portion A1, together with the piston 20, the damping force can also be changed by changing the outer diameter of the rod 2.

Furthermore, since the piston 20 protrudes from the rod 2 to the outer peripheral side, when the damper D1 extends and contracts, the granular material in the traveling direction of the piston 20 is compressed between the rod guide 10 or the guide 1c and the piston 20, so that the elastic force is exerted. That is, since the granular material in the room R1 constitutes the elastic portion E1, together with the spring 3, the spring characteristic can be changed by not only changing the spring 3 but also, for example, changing the granular material, changing the outer diameter of the piston 20, changing the inclination angle θ of the tapered portions 20a, 20b, and the like.

Hereinafter, the function and effect of the damper D1 according to the present embodiment will be described. In the present embodiment, the elastic portion E1 is provided on the outer periphery of the cylinder (first cylinder) 1 and includes the spring 3 interposed between the cylinder (first cylinder) 1 and the rod 2. Thus, since the elastic portion E1 and the damping portion A1 can be structurally disposed in parallel, the axial length of the damper D1 can be shortened while securing the stroke length. In addition, when a coil spring is used as the spring 3, the reaction force characteristic of the damper D1 approaches the proportional characteristic. However, the structure of the elastic portion E1 can be appropriately changed in accordance with a desired reaction force characteristic. For example, the elastic portion E1 may be a disc spring, an air spring, or a spring other than the coil spring.

Furthermore, in the present embodiment, the damper D1 includes: the cylinder (first cylinder) 1 containing the granular material; the rod 2 movably inserted into the cylinder 1; and the piston (first piston) 20 coupled to the rod 2 and disposed in the cylinder 1, and the damping portion A1 includes the piston (first piston) 20. Therefore, since the damping force can be adjusted by changing the axial length and the diameter of the piston 20, and the inclination angle θ of the tapered portions 20a, 20b, the number of tuning elements is increased and the damping force can be adjusted more finely.

As described above, the friction force also occurs between the rod 2 and the granular material at the time of extension and contraction of the damper D1, and the friction force can also be used as the damping force, so that the piston 20 may be eliminated and the rod 2 only may constitute the damping portion A1. Furthermore, although the damper D1 is of a double rod type (through rod type) in which the rod 2 extends to both sides of the piston 20, the rod 2 may be of a single rod type in which the rod 2 extends to one side of the piston 20.

In addition, in the present embodiment, the damper D1 includes: the damping portion A1 that exerts the damping force by using the granular material; and the elastic portion E1 that exerts the elastic force at the time of extension and contraction. The damping portion A1 is coupled to the elastic portion E1 such that the damping force and the elastic force are exerted in parallel. According to the above configuration, the friction force generated between the granular material and the damping portion A1 at the time of extension and contraction of the damper D1 can be used as the damping force, so that it is not necessary to use a liquid such as oil as a working fluid for generating the damping force. Therefore, in the damper D1, liquid leakage cannot occur and a problem of liquid leakage can be eliminated. Furthermore, unlike liquids such as oils and gases, without providing a seal, the granular material is not lost by flowing out, so that sealing is unnecessary. Therefore, in the damper D1, sealing can be eliminated and the cost can be reduced.

Furthermore, according to the above configuration, the damping force can be changed by, for example, the diameter, hardness, filling rate, and shape of the particles of the granular material, and there are quite a large number of tuning elements for adjusting the damping force. Therefore, since the damping force can be finely adjusted, the damping characteristic can be made a desired characteristic. Furthermore, when a material having a low linear extension coefficient is selected as the granular material, a change in the damping force characteristic due to a temperature change can be reduced.

### Second Embodiment

Like the damper D1, a damper D2 according to a second embodiment of the present invention illustrated in Fig. 3 is used in, for example, a caster of a carriage, a wheelchair, a stroller, or the like for carrying a load.

The damper D2 includes: a bottomed first cylinder 4; a bottomed second cylinder 5 into which the first cylinder 4 is inserted from the bottom 4a side and extending rightward in Fig. 3 from the first cylinder 4; a cap 50 for preventing the first cylinder 4 from coming off from the second cylinder 5; a rod 6 penetrating through the first cylinder 4, extending into the second cylinder 5, and movable in the axial direction; an annular rod guide 40 closing an opening of the left end in Fig. 3 of the first cylinder 4, the rod 6 penetrating through a center portion of the rod guide 40; a first piston 60 coupled to the rod 6 and moving in the axial direction in the first cylinder 4; and a second piston 61 coupled to the right end in Fig. 3 of the rod 6 and moving in the second cylinder 5 in the axial direction.

In the Fig. 3, an attachment portion 62 and an attachment portion 5d are provided at the left end in Fig. 3 of the rod 6 positioned at an end of the damper D2 and the right end in Fig. 3 of the second cylinder positioned at another end of the damper D2, respectively, and any one of the attachment portions 62, 5d is rotatably coupled to the bracket of the caster and the other one is rotatably coupled to the link of the caster. Thus, when the wheel of the caster moves up and down due to, for example, unevenness on a road surface, the rod 6 moves in the axial direction in the first cylinder 4 and the second cylinder 5, the damper D2 extends and contracts, and the link swings. The use of the damper D2 is not limited to casters, and can be appropriately changed.

Each member constituting the damper D2 will be described below. The first cylinder 4 has an annular bottom 4a, a cylindrical portion 4b extending from the outer periphery of the bottom 4a to one direction and is formed in a bottomed tubular shape, and a rod guide 40 is installed at an opening end of the cylindrical portion 4b. A granular material is contained in a first chamber R2 that is the room surrounded by the first cylinder 4 and the rod guide 40. The granular material is the aggregate of the particles formed of the elastomer such as nitrile rubber (NBR) and has elasticity. Each particle constituting the granular material can independently move in a state where at least no load is applied.

A bushing 41 and a bushing 42 are fitted to the inner periphery of the rod guide 40 and the inner periphery of the bottom 4a of the first cylinder 4, respectively, and the rod 6 is slidably inserted through the bushing 41 and the bushing 42. Each sliding gap is formed between the bushing 41 and rod 6 and between the bushing 42 and the rod 6. However, since the gaps are narrow, the granular material does not flow out of the first cylinder 4 from between the rod 6 and the rod guide 40 and from between the rod 6 and the bottom 4a, without providing a seal and the like therebetween.

An annular flange 40a is provided on the outer periphery of the rod guide 40 along the peripheral direction, and when the rod guide 40 is fitted to the first cylinder 4, the flange 40a is supported at the left end in Fig. 3 of the first cylinder 4. Furthermore, when the rod guide 40 is fitted to the first cylinder 4, the granular material does not flow out of the first cylinder 4, without providing a seal and the like therebetween.

Subsequently, the second cylinder 5 has an outer cylindrical portion 5a into which the first cylinder 4 is inserted, a bottomed second cylinder main body 5b having an inner diameter smaller than the inner diameter of the outer cylindrical portion 5a and continuing to the right side in Fig. 3 of the outer cylindrical portion 5a, and the attachment portion 5d extending rightward in Fig. 3 from a bottom 5c of the second cylinder main body 5b.

A thread groove is formed on the outer periphery of the opening end of the outer cylindrical portion 5a, and the cap 50 is screwed into the second cylinder 5 by using the thread groove. The cap 50 has an annular lid 50a formed with a through hole (not denoted) allowing insertion of the rod 6 and being caught by the flange 40a of the rod guide 40, and an annular nut 50b extending from the outer periphery of the lid 50a to one direction and threadedly engaged with the second cylinder 5. On the inner periphery of the second cylinder 5, an annular step 5e is formed at the boundary between the outer cylindrical portion 5a and the second cylinder main body 5b, and the inner diameter of the second cylinder main body 5b is smaller than the outer diameter of the first cylinder 4.

Therefore, with the first cylinder 4 inserted into the second cylinder 5 and the rod guide 40 installed on the first cylinder 4, when the cap 50 is put on the rod guide 40 from left in Fig. 3 and the nut 50b is threadedly engaged with the outer cylindrical portion 5a, the first cylinder 4 is clamped by the lid 50a of the cap 50 and the step 5e of the second cylinder 5, and is fixed to the second cylinder 5. The second cylinder 5 and the first cylinder 4 fixed to the second cylinder 5 are coupled to the bracket or the link of the caster via a pin 51 inserted through the attachment portion 5d of the second cylinder 5. Hereinafter, a member formed by combining the first cylinder 4 with the second cylinder 5 is referred to as a cylinder member 7.

Subsequently, the rod 6 is movably supported in the axial direction by the rod guide 40 and the bottom 4a of the first cylinder 4, penetrating through the first chamber R2, the left end in Fig. 3 passes from the first cylinder 4 into the lid 50a of the cap 50 and extends outward the cylinder member 7, and the right end in Fig. 3 is disposed in the second cylinder main body 5b. The annular first piston 60 is provided on the outer periphery of a portion that is a substantial center in the axial direction of the rod 6 and is disposed in the first chamber R2.

The first piston 60 is fixed to the rod 6, and moves left and right in Fig. 3 in the first chamber R2 while moving together with the rod 6, when the rod 6 moves left and right (axial direction) in Fig. 3. The outer diameter of the first piston 60 is formed so as to be larger than the outer diameter of the rod 6 and smaller than the inner diameter of the cylindrical portion 4b of the first cylinder 4, and an annular gap through which the granular material can pass is formed between the outer periphery of the first piston 60 and the inner periphery of the first cylinder 4. Furthermore, truncated conical tapered portions 60a, 60b are provided at both ends in the axial direction of the first piston 60, respectively, and the tapered portions 60a, 60b each gradually decrease in outer diameter to the leading end (Fig. 3(a)).

In addition, in the rod 6, an attachment portion 62 is fixed to the leading end of a portion projecting outward from the cylinder member 7. Then, the rod 6 is coupled to the bracket or the link of the caster via a pin 63 inserted through the attachment portion 62. Although the damper D2 does not include a cover for covering the outer periphery of the rod 6 projecting outward from the cylinder member 7, the cover may protect the sliding surface of the rod 6.

In addition, in the rod 6, a second piston 61 is provided on the outer periphery of the right end in Fig. 3 of the rod 6 projecting inward the second cylinder main body 5b, and the second piston 61 forms a second chamber R3 that is a second room, in the second cylinder 5. The second chamber R3 also contains a granular material, which is also the aggregate of the particles formed of the elastomer such as nitrile rubber (NBR) and has elasticity. Each particle constituting the granular material can independently move in a state where at least no load is applied. In Fig. 3, the left end of the granular material in the second chamber R3 is supported by the rod 6 via the second piston 61, and the right end of the granular material is supported by the bottom 5c of the second cylinder 5. As a result, the granular material in the second chamber R3 is interposed between the rod 6 and the cylinder member 7, and the granular material in the second chamber R3 exerts an elastic force in accordance with an amount of compression.

Furthermore, when the rod 6 moves leftward in Fig. 2 with respect to the cylinder member 7 and the second piston 61 abuts the bottom 4a of the first cylinder 4, further movement of the rod 6 to the left, that is, extension of the damper D2 is restricted. Fig. 3 illustrates the damper D2 in a state where no load is applied (unloaded state), and in the unloaded state, due to the elastic force of the granular material in the second chamber R3, the second piston 61 abuts the bottom and the damper D2 is in the utmost extension state (maximum extension state).

Hereinafter, an operation of the damper D2 according to the present embodiment will be described. When the rod 6 enters the cylinder member 7 and the damper D2 contracts, the granular material in the second chamber R3 is compressed by the second piston 61, so that the elastic force of the granular material is increased. Furthermore, when the damper D2 contracts, the first piston 60 moves rightward in Fig. 3 in the first chamber R2, so that the granular material on the right side in Fig. 3 of the first piston 60 passes through a gap formed on the outer periphery of the first piston 60 and moves to the left of the first piston 60. Then, a friction force occurs between the first piston 60 and the granular material, and the contraction of the damper D2 is suppressed by the friction force.

On the contrary, when the rod 6 leaves from the cylinder member 7 and the damper D2 extends, the second piston 61 enlarges the second chamber R3, so that the elastic force of the granular material in the second chamber R3 decreases. Furthermore, when the damper D2 extends, the first piston 60 moves leftward in Fig. 3 in the first chamber R2, so that the granular material on the left side in Fig. 3 of the first piston 60 passes through a gap formed on the outer periphery of the first piston 60 and moves to the right of the first piston 60. Then, a friction force is generated between the first piston 60 and the granular material, and the extension of the damper D2 is suppressed by the friction force.

When the damper D2 has been attached, the damper D2 contracts in accordance with a load applied to the vehicle body, the elastic body contained in the second chamber R3 elastically supports the vehicle body, and the damper D2 extends and contracts in accordance with an input received by the wheel from the road surface. When the damper D2 extends and contracts, impact due to unevenness on the road surface is absorbed by the granular material in the second chamber R3, and the extension and contraction movement of the damper D2 is dampened by a friction force generated between the first piston 60 and the granular material in the first chamber R2.

That is, in the damper D2, the friction force is used as the damping force, the first piston 60 is a damping portion A2 that exerts the damping force by using the granular material in the first chamber R2 when the damper D2 extends and contracts, and the granular material in the second chamber R3 is an elastic portion E2 that exerts the elastic force when the damper D2 extends and contracts. Since the first piston 60 moves in the first chamber R2 at the time of extension and contraction of the damper D2, the friction force is generated between the first piston 60 and the granular material in the first chamber R2, and the elastic body in the second chamber R3 extends and contracts, and the damping portion A2 is coupled to the elastic portion E2 such that the damping force and the elastic force are exerted in parallel. In other words, the damping portion A2 and the elastic portion E2 are dynamically disposed in parallel, and the damper D2 exerts a force obtained by combining the damping force with the elastic force.

Then, when a force against the extension and contraction of the entire damper D2 is defined as a reaction force of the damper D2, the damper D2 uses the granular material formed of the elastomer as the elastic portion E2, so that the characteristic of the elastic force (spring characteristic) with respect to the displacement of the damper D2 is a nonlinear characteristic, and the characteristic of the reaction force (reaction force characteristic) with respect to the displacement of the damper D2 approaches the above characteristic. Since the friction force is used as the damping force, hysteresis occurs in the reaction force characteristic of the damper D2, and when the damper D2 is used for a wheelchair, the ride comfort can be improved.

The characteristic of the damping force (damping characteristic) with respect to the displacement of the damper D2 can be adjusted by changing, for example, the diameter, hardness, filling rate, and shape of the particles of the granular material, a clearance between the first piston 60 and the first cylinder 4, the axial length of the first piston 60, and the shape of the tapered portions 60a, 60b. For example, since the granular material can be elastically deformed, when the diameter of the particles of the granular material is made larger than the clearance between the first piston 60 and the first cylinder 4, the particles of the granular material move while being crushed between the first piston 60 and the first cylinder 4 at the time of extension and contraction of the damper D2, and thus the friction force generated between the first piston 60 and the granular material increases and the damping force increases. In addition, even when the hardness of the particles constituting the granular material is increased or the filling rate is increased, the damping force increases. Furthermore, when an angle formed by the outer peripheral surface of the rod 6 and the outer peripheral surface of the tapered portion 60a or the outer peripheral surface of the tapered portion 60b of the first piston 60 is defined as an inclination angle θ (Fig. 3(a)) of the tapered portion 60a or the tapered portion 60b, the damping force increases even when the inclination angle θ is made small to come close to 90 degrees or the axial length of the first piston 60 is increased. When the damping force is increased as in this manner, the hysteresis is increased.

In addition, in the damper D2, when the rod 6 moves in the first chamber R2 at the time of extension and contraction, a friction force also occurs between the rod 6 and the granular material in the first chamber R2. That is, since the rod 6 also constitutes the damping portion A2, together with the first piston 60, the damping force can also be changed by changing the outer diameter of the rod 6.

Furthermore, in the damper D2, since the elastic portion E2 includes the granular material contained in the second chamber R3, the spring characteristic of the damper D2 can be changed by the diameter, hardness, filling rate, and shape of the particles of the granular material in the second chamber R3, and the volume of the second chamber R3. Furthermore, since the first piston 60 protrudes from the rod 6 to the outer peripheral side, the granular material in the first chamber R2 also constitutes the elastic portion E2, together with the granular material in the second chamber R3, and the spring characteristic can also be changed by, for example, changing the granular material contained in the first chamber R2, changing the outer diameter of the first piston 60, and changing the inclination angle θ of the tapered portions 60a, 60b. Thus, in the damper D2, since there are a large number of tuning elements for adjusting the spring characteristic, it is possible to finely adjust the elastic force and achieve a desired spring characteristic.

Hereinafter, the function and effect of the damper D2 according to the present embodiment will be described. In the present embodiment, the damper D2 includes: the second cylinder 5 which extends in the axial direction from the first cylinder 4 and into which the rod 6 is movably inserted; and the second piston 61 coupled to the rod 6 and forming the second chamber (room) R3 in the second cylinder 5. In addition, the elastic portion E2 includes the elastic granular material contained in the second chamber (room) R3. Therefore, the spring characteristic of the damper D2 can be adjusted by the diameter, hardness, filling rate, and shape of the particles of the granular material in the second chamber R3, and the volume of the second chamber R3. Thus, when using the elastic granular material in the elastic portion E2, since there are quite a large number of tuning elements for adjusting the spring characteristic, it is possible to achieve a desired spring characteristic.

Furthermore, according to the above configuration, the room containing the granular material for exerting the damping force and the room containing the granular material for exerting the elastic force are divided into the first chamber R2 and the second chamber R3, so that the granular material for generating the damping force and the granular material for generating the elastic force do not mix. Therefore, the damping characteristic and the spring characteristic can be substantially, independently adjusted by changing the granular material in each room, which achieves easy adjustment. However, the position of the first piston 60 and the second piston 61 may be reversed from the position in the damper D2, so that only one room containing the granular material may be provided.

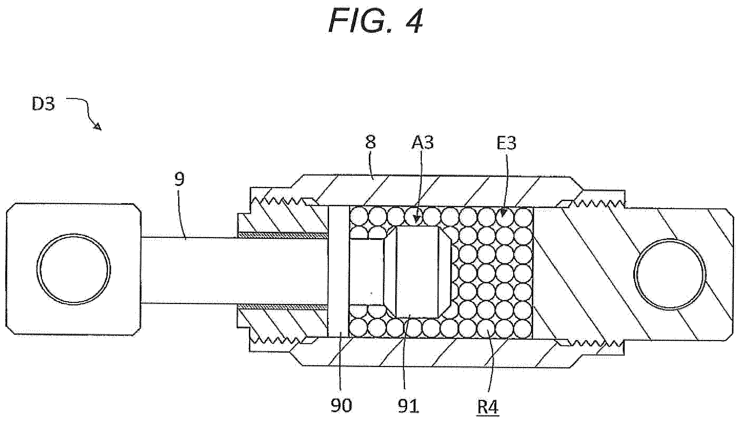

Specifically, Fig. 4 illustrates a modification of the damper D2 as described above. A damper D3 according to the modified example illustrated in Fig. 4 includes: a cylinder (first cylinder) 8; a rod 9 movably inserted into the cylinder 8; a second piston 90 coupled to the rod 9 and forming a room R4 in the cylinder 8; and a first piston 91 coupled to the leading end of the rod 9 and disposed in the room R4. The room R4 contains an elastic granular material, a damping portion A3 includes the first piston 91, and an elastic portion E3 includes the granular material. In such a damper D3, when attempting to change the spring characteristic, the damping characteristic is also changed at the same time, and in this case as well, there are a large number of tuning elements for adjusting the damping force and the elastic force.

In addition, in the damper D2 and the damper D3, in a case of sealing the second chamber R3 or the room R4, gas (air) present in a void between one particle and another particle of the granular material contained in the second chamber R3 or the room R4 is enclosed in the second chamber R3 or the room R4 and functions as a gas spring, so that the gas spring is also a component of the elastic portion E2 and the elastic portion E3. With this configuration, the elastic force can be changed by supplying/discharging the gas (air) into the second chamber R3 or the room R4, and when the second chamber R3 or the room R4 is filled with compressed air and pressurized, the elastic force by the elastic portion E2 and the elastic portion E3 can be increased. The configuration of the elastic portion E2 and the elastic portion E3 is not limited to the above, and can be appropriately changed. For example, the elastic body contained in the second chamber R3 and the room R4 may be eliminated, air only may be enclosed to function as a gas spring, and a metal spring such as a coil spring and a disc spring may be housed.

In addition, in the present embodiment, the damper D2 includes: the first cylinder 4 containing the granular material; the rod 6 movably inserted into the first cylinder 4; and the first piston 60 coupled to the rod 6 and disposed in the first cylinder 4. Therefore, since the damping force can be adjusted by changing the axial length and the diameter of the first piston 60, and the inclination angle θ of the tapered portions 60a, 60b, the number of tuning elements is increased and the damping force can be adjusted more finely. The same effect can be obtained also with the damper D3.

As described above, the friction force also occurs between the rod 6 and the granular material at the time of extension and contraction of the damper D2, and the friction force can also be used as the damping force, so that the first piston 60 may be eliminated and the rod 6 only may constitute the damping portion A2. Such a change is also possible with the damper D3. Furthermore, although the damper D3 is of the single rod type in which the rod 9 extends to one side of the first piston 91, the damper D3 may be of the double rod type.

In addition, in the present embodiment, respectively, the dampers D2 and D3 include the damping portion A2 and the damping portion A3 that exert the damping force by using the granular material at the time of extension and contraction, and the elastic portion E2 and the elastic portion E3 that exert the elastic force at the time of extension and contraction. The damping portion A2 and the damping portion A3 are coupled to the elastic portions E2 and the elastic portion E3, respectively such that the damping force and the elastic force are exerted in parallel. According to the above configuration, the friction force generated between the granular material and the damping portion A2 and between the granular material and the damping portion A3 at the time of extension and contraction of the damper D2 and the damper D3 can be used as the damping force, so that it is not necessary to use a liquid such as oil as a working fluid for generating the damping force. Therefore, in the damper D2 and the damper D3, liquid leakage cannot occur and a problem of liquid leakage can be eliminated. Furthermore, unlike liquids such as oils and gases, without providing a seal, the granular material is not lost by flowing out, so that sealing is unnecessary. Therefore, in the dampers D2 and D3, sealing can be reduced and the cost can be reduced.

Furthermore, according to the above configuration, the damping force can be changed by, for example, the diameter, hardness, filling rate, and shape of the particles of the granular material, and there are quite a large number of tuning elements for adjusting the damping force. Therefore, since the damping force can be finely adjusted, the damping characteristic can be made a desired characteristic. Furthermore, when a material having a low linear extension coefficient is selected as the granular material, a change in the damping force characteristic due to a temperature change can be reduced.

Although the preferred embodiments of the present invention have been described in detail, alternations, modifications, and changes can be made without departing from the scope of the claims.

This application claims priority based on Japanese Patent Application No. 2016-143561 filed with the Japan Patent Office on July 21, 2016, and the entire contents of this application are incorporated herein by reference.

## Claims

1. A damper comprising:
a damping portion that exerts a damping force by using a granular material at a time of extension and contraction; and
an elastic portion that exerts an elastic force at the time of extension and contraction,
wherein the damping portion is coupled to the elastic portion such that the damping force and the elastic force are exerted in parallel.

2. The damper according to claim 1, comprising:
a first cylinder containing the granular material; and
a rod movably inserted into the first cylinder,
wherein the damping portion includes the rod.

3. The damper according to claim 2, comprising:
a first piston coupled to the rod and disposed in the first cylinder,
wherein the damping portion includes the first piston.

4. The damper according to claim 2,
wherein the elastic portion is provided on an outer periphery of the first cylinder and includes a spring interposed between the first cylinder and the rod.

5. The damper according to claim 2, comprising:
a second cylinder which extends in an axial direction from the first cylinder and into which the rod is movably inserted; and
a second piston coupled to the rod and forming a room in the second cylinder,
wherein the elastic portion includes at least one of a gas spring including gas enclosed in the room and an elastic granular material contained in the room.
